# EUROPEAN PATENT SPECIFICATION

(11) **EP 2 344 272 B1**
(45) Date of publication and mention of the grant of the patent: **14.09.2016**
(21) Application number: 09820310.2
(22) Date of filing: 01.10.2009
(51) Int. Cl.: B01F 3/04, B01J 19/18, B01F 7/18, B01F 7/00, B01J 8/22

(54) **MIXER AND METHOD FOR MIXING A GAS AND SOLUTION**
MISCHER UND VERFAHREN ZUR MISCHUNG EINES GASES UND EINER LÖSUNG
MELANGEUR ET PROCEDE DE MELANGE D'UN GAZ ET D'UNE SOLUTION

(30) Priority: 17.10.2008 FI 20080579
(43) Date of publication of application: 20.07.2011
(73) Proprietor: Outotec Oyj, 02230 Espoo (FI)
(72) Inventor: NYMAN, Bror, FIN-28450 Vanha-Ulvila (FI); LILJA, Launo, FIN-28360 Pori (FI); HULTHOLM, Stig-Erik, FIN-28360 Pori (FI); GRAU, Rodrigo, FIN-28660 Pori (FI)
(74) Representative: Papula Oy
(86) International application number: PCT/FI2009/050785
(87) International publication number: WO 2010/043762

(56) References cited:
- EP-A1- 0 865 821
- EP-A2- 0 052 298
- DE-A1- 3 029 423
- DE-C- 681 943
- US-A- 2 964 301
- US-A- 4 548 765
- US-A- 4 548 765
- US-A- 5 078 505
- US-A- 5 240 327
- US-B2- 7 070 174

## Description

### FIELD OF THE INVENTION

The invention relates to a mixer providing a powerful pumping capacity. The mixer is intended for conditions in which the solution or slurry to be processed is difficult to treat and into which gas is conducted with the intention of dispersing it evenly and effectively into the solution. The mixing method is especially suited to a hydrometallurgical process, where the purpose is to disperse the gas into the solution and obtain effective mixing both on micro- and macro-level.

### BACKGROUND OF THE INVENTION

US patent 4,548,765 describes a mixer, in which there are dispersing blades located above and below a circular plate attached to the mixer shaft and baffle blades placed at the end of arms outside the circular plate. The centre of gravity of the blades is below the circular plate. The mixer is intended for mixing gas, liquid and solids together into a good dispersion, whereby chemical reactions can proceed in a controlled manner.

In contrast, US patent 7,070,174 describes a mixing apparatus, which consists of two mixers fixed onto the mixer shaft. The mixer is intended for closed reactors, for example vertical autoclaves. The purpose of the mixing apparatus is to disperse gas into a slurry where the gas is fed into the reactor from above the surface of the slurry.

In the apparatus accordant with US patent 7,070,174, the upper mixer comprises a central plate attached to the shaft, inner blades attached to the central plate and outer blades attached to the outer edge of the central plate. The inner edge of the inner blades above the central plate is made to narrow outwards in the shape of an arc and below the central plate the inner edge is straight. The outer edge of the inner blade is vertical all along. The outer blades are attached directly to the central plate at the same point as the inner blades. The outer blades are rectangular and their angle of inclination to the central plate is 30 - 60 degrees. The mixing apparatus also includes a lower mixer, which consists of a round central plate and blades attached to its outer edge. The outer edge of the blades and the inner edge above the central plate are vertical, but the part of the inner edge below the central plate narrows outwards in the shape of an arc. The purpose of the upper blades of the mixer is to bring about a vortex that sucks the gas from the surface of the liquid and to disperse the gas into small bubbles. Since the upper mixer is not able to achieve effective mixing of the slurry in addition to dispersing, the mixing apparatus is equipped with a lower mixer with the purpose of obtaining a good mixing of the slurry itself and further to disperse the gas bubbles into smaller bubbles and mix them into the slurry. The lower mixer takes considerably more power than the upper mixer. The mixing apparatus is intended always to comprise at least two of the mixers described above.

### PURPOSE OF THE INVENTION

The mixers described above are practical for many purposes, but nevertheless they have proved insufficient in conditions where mixing on the micro- and macro-level as well as gas dispersion into a solution or slurry is a vital condition for the success of many processes, and where it is desired to avoid, for instance, the formation of harmful co-products and wear of the apparatus.

### SUMMARY OF THE INVENTION

The essential features of the mixer and method accordant with the invention will be made apparent in the attached claims.

The invention relates to a mixer providing powerful pumping capacity for mixing a solution or slurry and gas, whereby the mixer comprises a circular plate symmetrically attached to the lower end of the shaft, vertical inner mixer blades radially attached to the outer edge of the plate above and below it and outer blades attached to the circular plate by means of an arm. It is typical of the mixer that the blades are located symmetrically in terms of elevation on either side of the circular plate.

It is also typical of the mixer that the number of both inner and outer blades is 5-8.

In the mixer accordant with the invention, the inner edge of the inner blade, which includes both the parts above and below the circular plate, is made curved in the direction of the mixer shaft so that the upper and lower edge of the blade are horizontal from the outer edge for a distance that is 35-50 % of the total blade width. The curved inner edge of the inner blade is preferably shaped like a parabola. The height of the inner blades is of the order of 38 - 46 % and the width 14 - 20 % of the total mixer diameter. The outer edge of the inner blade is vertical and extends preferably beyond the circular plate by a distance that is of the order of 0.5 - 2 % of the diameter of the mixer.

The outer blades in the mixer accordant with the invention are at an angle of 50 - 70°, preferably 60°, to the plane formed by the circular plate. The outer blades are rectangular in shape and their height is in the region of 3 - 3.5 times their width.

In one embodiment of the invention the inner and outer blades face each other, i.e. the arm joining the outer blade to the circular plate is attached to the circular plate at the same point as the inner blade.

In another embodiment of the invention the inner and outer blades are attached to the circular plate, offset to each other. The inner and outer blades may be displaced by 0 - 36° to each other. According to one alternative, the offset between the inner and outer blades can be adjusted.

It is typical of a mixer accordant with the invention that the length of the arms attaching the outer blades to the circular plate is around 3-4 % of the total diameter of the mixer.

The mixer accordant with the invention is suitable for use in both atmospheric and pressurised conditions, i.e. in an autoclave.

The invention also relates to a method for feeding gas into a solution or slurry, particularly in hydrometallurgical processes. The effective dispersing of gas into the solution and a good mixing on micro- and macro-level is achieved by means of one mixer located in an agitated reactor, whereby gas dispersing and micro-level mixing occur by means of the inner mixer blades and macro-level mixing by means of the outer mixer blades, with their combined effect resulting in a flow rising upwards from the walls of the agitated reactor and turning down near the surface of the liquid to the mixer.

The mixer used in this method is a mixer as previously defined.

It is typical of the method that the gas is mixed into the solution in a reactor, where the filling height to diameter is 0.8 - 1.4. Mixing of the gas into the solution occurs with a mixer that has a power factor Nₚ in the region of 4 - 10.

The method accordant with the invention is particularly suitable for a solution which is a chromium (VI)-containing solution and where the gas to be fed is sulphur dioxide. According to one alternative, the solution is a chromium (VI)-containing nitric acid-based solution. According to another alternative, the solution is a chromium (VI)-containing sulphuric acid-based solution.

The method accordant with the invention is also suitable when the solution to be treated contains at least one of the metals zinc, nickel or cobalt and the gas to be fed is a sulphur dioxide- and oxygen-containing gas.

### LIST OF DRAWINGS

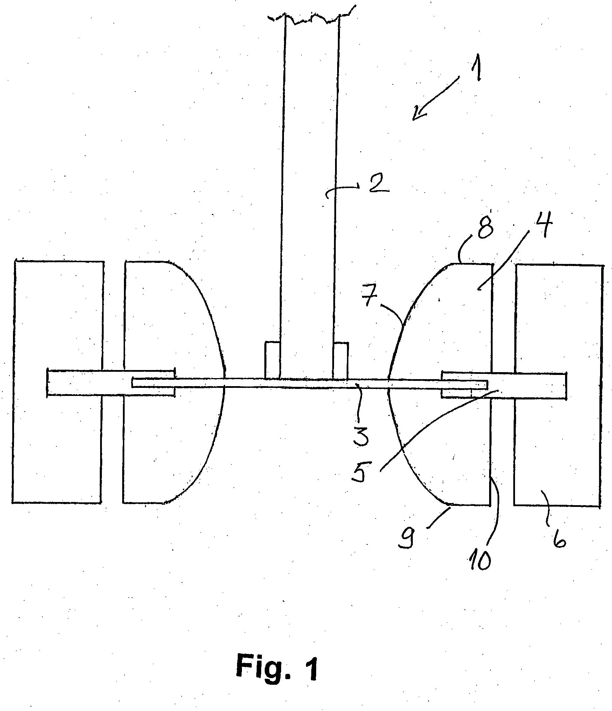

Figure 1 presents a mixer accordant with the invention seen from the side,
Figure 2 presents a mixer accordant with the invention seen from above in accordance with one of the alternative blade locations,
Figure 3 presents a mixer seen from above in accordance with another of the alternative blade locations,
Figure 4 is a vertical section of mixers of the prior art of the types described in the example and a mixer accordant with the invention,
Figure 5 shows the distribution of power in the mixers according to Figure 4,
Figure 6 shows a typical flow diagram of the mixing method as a vertical section, and
Figure 7 shows a vertical section of a typical flow diagram of the mixing method in a partially drawn autoclave.

### DETAILED DESCRIPTION OF THE INVENTION

The mixer accordant with the invention is well-suited for instance as a mixer in an oxidising or reducing gas/solution process in hydrometallurgy, where effective mixing on micro- and macro-level is required in order for the mixing process to be successful, for example, to avoid harmful side-reactions.

It is typical of the mixer 1 accordant with the invention that the mixer suspended from shaft 2 comprises a circular plate 3 attached symmetrically to the lower end of the shaft, inner mixer blades 4 fixed radially to both the upper and lower sides of the plate and outer blades 6 attached to the circular plate by means of an arm 5. In order for the mixing of the material being treated to become effective enough, when the tip speed of the outer blades is in the region of 5 - 7 m/s, some significant changes have been made to the mixer accordant with the invention in comparison with the mixers of the prior art. The tip speed in question corresponds mainly to the critical speed after which the wear of the mixing mechanism increases noticeably. A mixer accordant with the invention enables for instance the effective micro- and macro-level mixing in full-scale reactor size (50 - 500 m³) to be achieved at a power level of 1.5 - 5.0 kW/m³, when the tip speed of the mixer is at the level mentioned above, and the power factor Nₚ of the mixer rises in that case to between 4 and 10. Generally a power factor of 2.4 - 3.0 is reached with mixers of the prior art.

The number of both inner and outer blades in a mixer accordant with the invention is 5 - 8. Gas is fed into the reactor from the lower section towards the circular plate via a separate feed pipe. If necessary, the mixer shaft may be made hollow, so that the feed of gas may occur through it to below the circular plate if so desired. The structure of the mixer is however developed to be such that it is also able to suck in gas from above the surface of the liquid. The ratio of the mixer diameter to the agitated reactor is in the region of 0.35 - 0.40. The mixer is particularly effective when the reactor around it is in the shape of a vertical cylinder and the ratio of its effective height (filling height) to the diameter is 0.8 - 1.4. Experts in the field believe that a reactor should be equipped with two mixers if the reactor height/diameter ratio is above 1, but in the tests carried out it was found that a good mixing result could still be achieved at the ratio given above with a mixer accordant with the invention.

In order to increase the mixing efficiency on both the upper and lower sections of the mixer, the mixer is formed so that the blades are located symmetrically with regard to the circular plate, whereby an equally large part of the blades is above and beneath said circular plate. To improve mixing efficiency, now the inner edge 7 of the inner blade, which includes the part both above and below the circular plate, is made curved in the direction of the mixer shaft, preferably in a parabola, however such that the upper edge 8 and the lower edge 9 of the blade are horizontal from the outer edge inwards for a distance that is 35-50% of the total width of the blade. The outer edge 10 of the inner blade is typically vertical and extends preferably beyond the circumference of the circular plate by a distance that is in the order of for instance 0 - 2% of the diameter of the mixer. The inner blades are fitted perpendicular to the circular plate and extend preferably the same distance above and below the plane formed by the circular plate. The height of the inner blades is in the region of 38 - 46% and the width 14 - 20% of the total diameter of the mixer. The inner blades are particularly designed to disperse gas into a slurry, so they may also be named dispersion blades.

It has been found empirically that the dispersing blades are so effective that they enable gas to be sucked into the slurry also from above the surface, whether the gas is fed there or is a gas that is circulating in the reactor. In addition to acting as dispersing blades, the inner blades also have the purpose of achieving good micro-level mixing. Often, even though mixing equipment achieves good macro-level mixing, i.e. extending over the entire reactor, on the micro-level the mixing between particles and solution or gas and solution is not effective. It has been found in the tests carried out that dispersing blades accordant with the invention enable effective micro-level mixing to be attained.

Arms 5 are attached to the outer edge of the circular plate 3, and in turn outer blades 6 are fixed onto the outer end of said arms. The outer blades are rectangular in shape and their height is in the region of 3 - 3.5 times their width. The width of the outer blade at the point of the circular plate is in the region of 10 - 20%, preferably 15%, of the total mixer diameter. The blades are at an angle of 50 - 70°, preferably 60° to the plane formed by the circular plate. The outer blades are also symmetrical with regard to the circular plate, i.e. they extend essentially the same distance above and below the plane formed by the circular plate. The length of the arms 5 attaching the outer blades to the circular plate is in the region of 3-4 % of the total mixer diameter. The task of the outer blades is to achieve macro-level mixing, i.e. to make the solution-gas dispersion mixed by the inner blades circulate in the reactor in the desired manner.

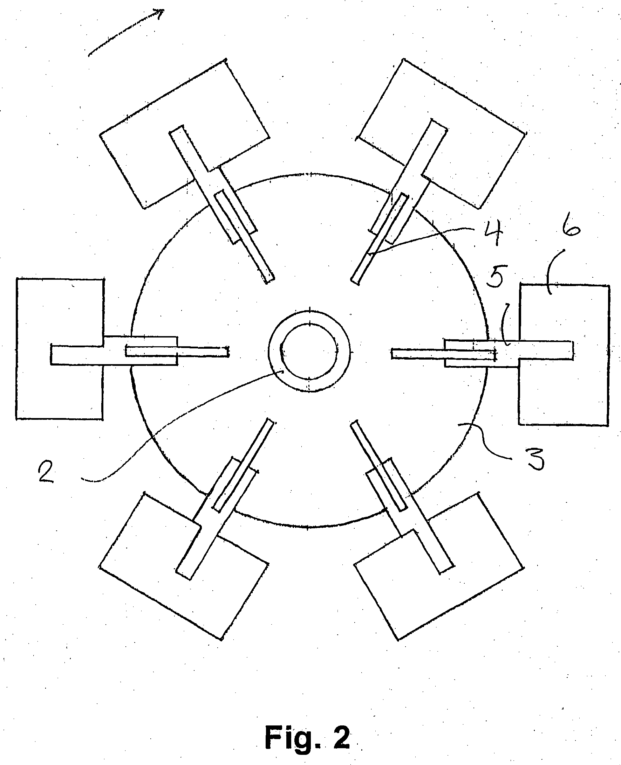

In the embodiment according to Figure 2 the inner and outer blades are both 6 in number, but the quantity may vary between 5 and 8. The number depends mostly on the size of the reactor into which the mixer is placed. The blades in Figure 2 are located so that the inner and outer blades face one another, i.e. the arm connecting the circular plate to the outer blade is attached to exactly the same point as the inner blade.

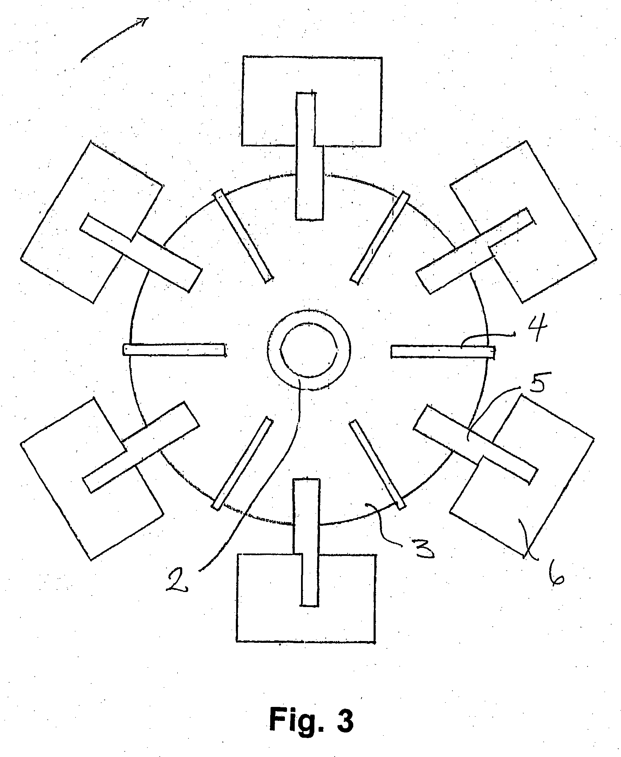

In the embodiment according to Figure 3 there are also 6 outer and 6 inner blades, but now the blades are attached to the circular plate at a different point from each other. The blades in Figure 3 are offset to each other by 30 degrees. It is characteristic of the mixer solution according to the invention that the blades are offset to each other by 0 - 36° depending on the number of blades and the mixing requirements. When the blades are offset to each other, twice as many dispersion points are generated around the mixer in the material to be mixed compared to when the blades face each other. When a mixer according to Figure 3 is placed in a reactor, which is over 50 m³ in size and dimensioned in the manner described above, the tip speed of the inner blades rises to over 4 m/s, in other words clearly into the dispersion zone. The final result obtained is a more even dispersion of gas into the solution or slurry in the reactor. The offset is at maximum when the outer blades are exactly between the inner blades. Thus the maximum offset is between 36 - 22.5° depending on the number of blades. It is also characteristic of the mixer according to the invention that the offset between the blades can be adjusted as required.

In the case according to Figure 3, in which the number of both inner and outer blades is 6, an effective solution for the placement of the inner and outer blades is that the inner blades are preferably in the region between 20° before and 10° behind the outer blades in relation to the rotation direction of the mixer. When the inner blade moves in front, the gas coming from below the circular plate will rise radially with the releasing eddies from the inner blades and will fall immediately into the domain of the following outer blades.

The gas is dispersed very evenly when the offset is for instance 20 degrees, whereby the gas ends up in a wider space to be dispersed by the outer blades and in that case dispersing efficacy is achieved particularly from the effect of the upper parts of the circular plate. When the offset is in the region of 5 degrees, a powerful local dispersing is achieved when the gas and slurry are discharged upwards and outwards through the small gaps formed by the inner and outer blades.

The respective location of the inner and outer blades has an especially powerful effect when the mixer is dimensioned for a reactor with a volume of over 100 m³. In that case the absolute transfer lengths of the gas are considerable, but the effect of the distance can be reduced by increasing the number of mixer blades.

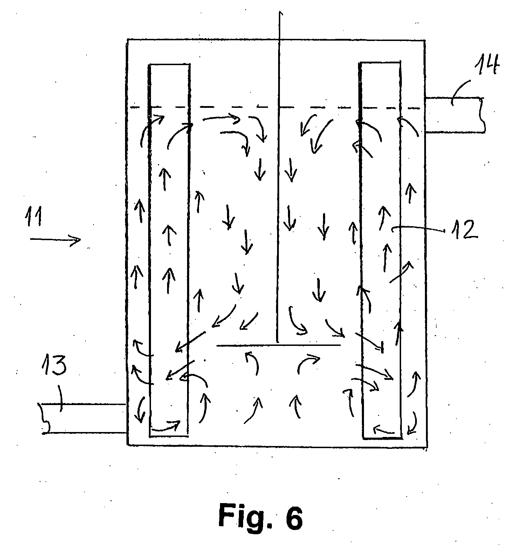

It is typical of the method accordant with the invention that a flow pattern according to Figure 6 is formed in the agitated reactor. The flow pattern shows that by means of a mixer 1 accordant with the invention, a solution flow is formed in the reactor 11 that is firstly directed obliquely downwards, and is diverted by the reactor wall to flow partially downwards, circulating back to the mixer. The other part of the flow is diverted upwards and rises along the reactor walls, and is turned at the centre of the reactor as a result of the suction effect of the mixer back down to the mixer. In place of the vertical baffles normally located on the reactor wall it is preferable to use vertical plates 12, set nearer to the mixer, which are wider than standard baffles. It is characteristic of the method that effective mixing of a controlled shape extending throughout the entire reactor is achieved using only one mixer, with an outer blade tip speed being at most in the region of 5 - 7 m/s, because the power factor of the mixer accordant with the invention is as much as 4 - 10. The solution to be treated is fed into the reactor normally from the lower section via the feed unit 13 and removed from the upper section of the reactor via the vent unit 14. The gas is fed below the mixer, in the vicinity of the circular plate (not shown in detail in the drawing). The mixing method is intended particularly for hydrometallurgical processes.

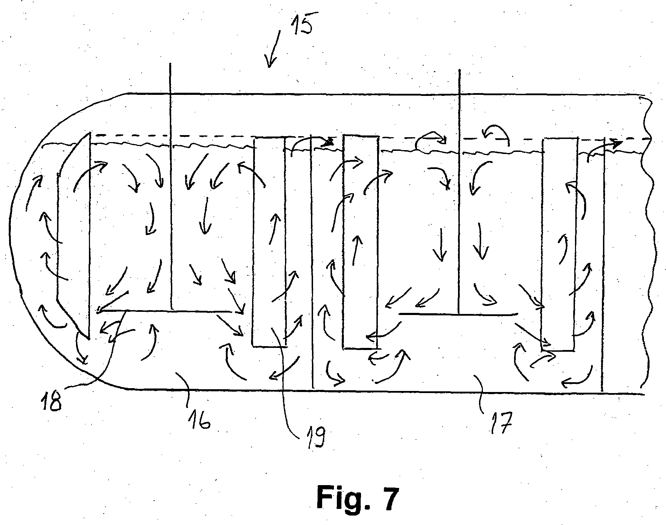

The mixer and mixing method accordant with the invention are well suited for mixing that occurs at the prevailing pressure, i.e. in atmospheric conditions. However, the mixer can also be used in pressurised reactors as in Figure 7 i.e. in an autoclave 15, particularly when the autoclave is a horizontal-model cylinder, which is divided into compartments. The autoclave in Figure 7 is seen from the side and only the first two compartments 16 and 17 are visible. Each compartment is equipped with a mixer accordant with the invention 18 and preferably with four baffles 19. In the same way as was found regarding atmospheric leaching above, it is also preferable in autoclave leaching to use baffles that are wider than standard baffles, whereby the same type of solution flow is achieved as that described in Figure 6, i.e. a powerful circulation from below upwards at the walls of each autoclave compartment and downwards in the centre of the compartment towards the mixer. The gas to be mixed is fed either below the mixer and/or into the pressurised gas phase above the solution or slurry to be mixed. Thanks to the effective mixer, it is also possible to suck the gas above the surface of the solution into the liquid.

### EXAMPLES

### Example 1

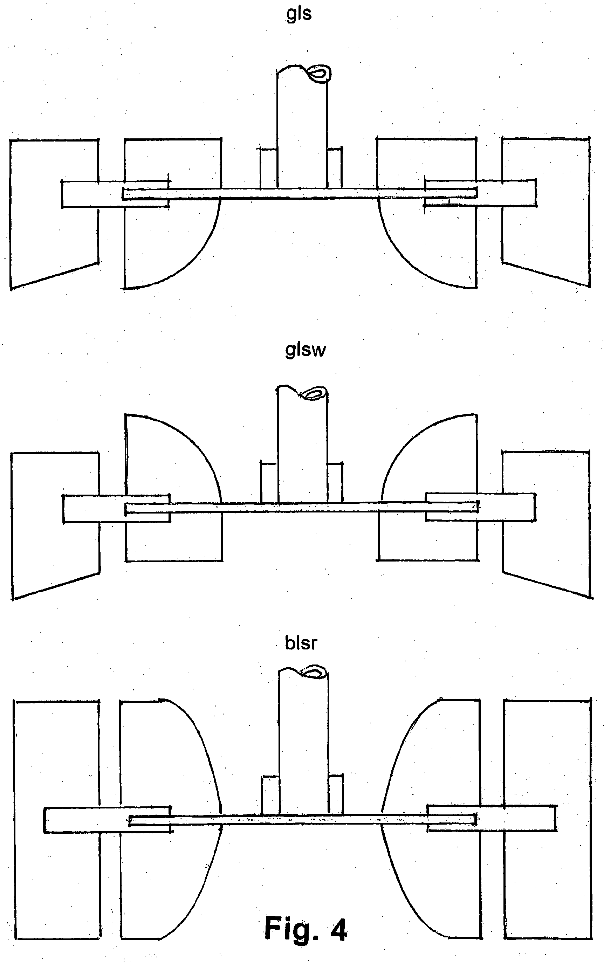

Three mixers are compared with each other, two of which are accordant with the prior art and the third accordant with the invention. The first is a mixer of the prior art, described in US patent 4,548,765, known by the abbreviation gls, the second an upper mixer type of the mixing apparatus described in US patent 7,070,174, known by the abbreviation glsw. To facilitate comparison, the outer blades of the glsw mixer are located on the end of the arm, the same as in the other mixers and not attached to the circular plate as described in the patent. The third is a mixer accordant with the invention, known by the abbreviation blsr. A vertical section of the mixers is shown in Figure 4.

All the mixers have one interesting characteristic: their power draw can be changed by changing their location, i.e. height, in the reactor. With all of them the power take-off increases to a certain value when the mixer is raised upwards. This is due to the increasing of flow eddies. As the flow hits the bottom only a simple flow is formed from the centre down and then up along the sides of the reactor. When the mixer is raised, the flow hits the sidewall of the reactor, whereby a double toroid is formed: slurry flowing down the reactor wall turns inwards and rises back below the mixer and another eddy flow rises up along the wall and returns to the central section above the mixer. This increase in eddies raises the power draw.

The shaft power is calculated according to the following known equation:
P_{shaft} = Ψ Nₚ ρ N³ D⁵, where
P_{shaft} = shaft power [W]
Ψ = output correction factor [-], taking account of changes in the mixer location for example
Nₚ = power factor (property of the mixer) [-]
ρ = density of medium to be mixed [kg/m³]
N = number of mixer revolutions [1/s]
D = diameter of mixer [m]

The gls mixer is usable when the gas to be dispersed is fed below the mixer at the central point. Thanks to the negative pressure created behind the inner blades the gas disperses into the slurry. The outer blades are at an angle of 45 degrees and enable the attainment of a flow directed obliquely downwards towards the reactor wall, a double toroid, which raises the power draw. Successful mixing requires that the mixer is at a sufficient distance from the bottom, and when the solid particles in the slurry to be treated are coarse, the mixing efficiency is usually not enough, and a mass of solids begins to form on the bottom.

The glsw mixer is intended to disperse gas from above the surface of the liquid, gas that is either fed there or is circulating there during mixing. Otherwise the same characteristics apply to this mixer as to the gls mixer.

The blsr mixer accordant with the invention has been developed particularly for the following purposes:
- Dispersing gas fed from both above and below into a slurry,
- Handling chemical mixing processes that require a great deal of energy (power/volume),
- Mixing abrasive solid particles into a liquid, when their mixing requires great turbulent energy,
- Particularly for processes, where the mixing efficiency has to extend right up to the surface of the liquid.

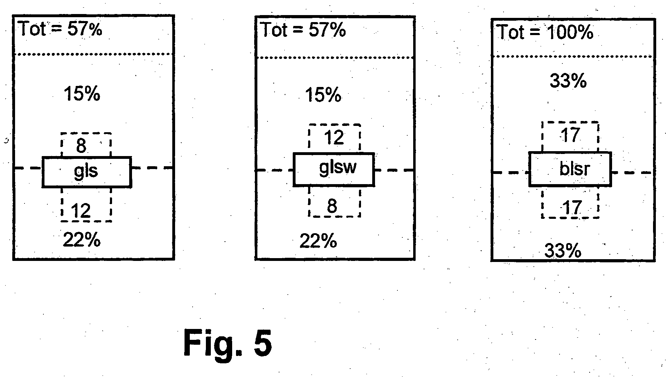

The characteristics described above are shown in Figure 5 and in the tables below, where the power distributions at different points of the reactor are itemised. In the comparison, the power of the blsr mixer accordant with the invention is ascribed a value of 100%, and the other mixers are compared with this. The location of the mixer in the reactor is the same for all, as are the mixer diameters. The reactor conditions are also the same in each case. The tip speed of the mixer calculated from the outer edge of the inner blades is the same for all, i.e. 6 m/s.

### Gas dispersing (inner blades, micro-mixing):

| | **gls** | **glsw** | **blsr** |
|---|---|---|---|
| Power [kW/m³] | | | |
| Upper part | 8% | 12% | 17% |
| Lower part | 12% | 8% | 17% |
| Length of outer edge [m] | | | |
| Upper part | 45% | 78 % | 100% |
| Lower part | 78% | 45% | 100% |

### Mixing energy (outer blades, macro-mixing)

| Output [kW/m³] | **gls** | **glsw** | **blsr** |
|---|---|---|---|
| Upper part | 15% | 22% | 33% |
| Lower part | 22% | 15% | 33% |

It is also calculated in Figure 5, how much output the mixer is able to provide the reactor with above and below the mixer. The partial output of the mixers accordant with the prior art is compared with the output of the blsr mixer. The result obtained was that the power factor Nₚ of the blsr mixer is in the order of 1.7 times that of the mixers of the prior art. The output comparison between the mixers is given again in tabular form:

| **Power %** | **gls** | **glsw** | **blsr** |
|---|---|---|---|
| Tot | 57.3 | 57.3 | 100 |
| Mix-Y | 15.2 | 15.2 | 32.6 |
| Mix-A | 22.1 | 22.1 | 32.6 |
| Dis-Y | 8.3 | 12.2 | 17.4 |
| Dis-A | 12.2 | 8.3 | 17.4 |

| | | | |
|---|---|---|---|
| Tot = total power % Mix-Y = mixing power in the upper space of the mixer, % Mix-A = mixing power in the lower space of the mixer, % Mix-Y + Mix-A = micro-level Dis-Y = dispersing power in the upper space of the mixer, % Dis-A = dispersing power in the lower space of the mixer, % Dis-Y + Dis-A = macro-level | | | |

### Example 3

The example describes the use of the blsr mixer in the dispersing of a gas and a solution. An agitated reactor is equipped with wide baffles and a blsr mixer located on one plane. The combined effect achieved is the effective dispersing of the gas and a strong flow of the solution from the edges of the reactor upwards and from the centre back down to the mixer. Thanks to the powerful flow the majority of the gas bubbles coming to the surface are sucked back into the solution and return to the mixer, whereby an effective utilisation of the gas is obtained.

One solution generated in the pickling of refined steel contains hexavalent chromium (Cr⁶⁺), which has to be reduced to trivalent by means of sulphur dioxide gas. The reduction process in question is generally a problematic one and becomes particularly difficult when the chromium is in a nitric acid-based solution. In order for the reduction and dispersing of the sulphur dioxide in the solution to succeed, the mixing has to be very effective, i.e. with a power factor between 4 and 10. If the mixing weakens, the following reactions will take place in the solution, in other words first side-reaction (1), which leads to further reaction (2), forming harmful NOX gas:

SO₂ + HNO₃ + H₂O ↔ HNO₂ + H₂SO₄ (1)

2 HNO₂ ↔ NO + NO₂ + H₂O (2)

When the mixing efficiency is sufficient, as in the case accordant with the invention, the desired reaction is made to occur:

Fe₂(Cr₂O₇)₃ + 9 SO₂ + 6 HNO₃ ↔ 2 Fe(NO₃)₃ + 3 Cr₂(SO₄)₂+ 3 H₂O (3)

The reaction is also made to occur in the upper part of the reactor and not only in the vicinity of the mixer. Thanks to the powerful mixing, even the NOX gas potentially generated during reduction is made to react further:

9 SO₂ + 9 HNO₃ + 9 H₂O ↔ 9 HNO₂ + 9 H₂SO₄ (4)

Fe₂(Cr₂O₇)₃ + 9 HNO₂ + 15 HNO₃ ↔ 2 Fe(NO₃)₃ + 6 Cr(NO₃)₃ + 9 H₂SO₄ + 12 H₂O (5)

In this case the total reaction is as follows:

Fe₂(Cr₂O₇)₃ + 9 SO₂ + 24 HNO₃ ↔ 2 Fe(NO₃)₃ + 6 Cr(NO₃)₃ + 9 H₂SO₄ + 3 H₂O (6)

Effective mixing is required in this case due to the large number of ions involved in the reaction. Thanks to powerful mixing the development of NOX can be terminated in two ways. Firstly, strong mixing favours the main reaction, where the number of reactive ions is large, but nevertheless smaller than the number in the side reaction. Secondly, powerful mixing enables any possible NOX gas that is generated to react with the hexavalent chromium.

The effective mixing method described above is also advantageous in the reduction of chromium(VI) when the solution is sulphuric acid based, because there too it is a question of a large amount of reactive ions and nevertheless it is desired to get the level of chromium(VI) to the range of less than one microgram per litre.

### Example 4

Another hydrometallurgical process that requires effective mixing in order to succeed, is induced oxidation. Such a process is typically the combined removal of manganese and iron from a solution that contains at least one of the following group of metals: zinc, cobalt or nickel, in which sulphur dioxide and an oxygen-containing gas are fed into the solution. A powerful mixing efficiency is needed in the method, so that the reaction (7) forming sulphuric acid does not become too strong:

SO₂ + H₂O + ½ O₂ ↔ H₂SO₄ (7)

Since the removal of manganese/iron requires accurate pH adjustment, in addition to oxygen additional neutralising agents are also consumed in this harmful side reaction.

The mixing equipment that enables powerful mixing to be attained also in the upper section of the reactor, facilitates the raising of the sulphur dioxide / oxygen ratio in the feed gas, whereby a strong induction is obtained in the precipitation reaction (8):

2 FeSO₄ + 2 MnSO₄ + 11 H₂O + SO₂ + 1½ O₂ ↔ 2 Fe(OH)₃ + 2 Mn(OH)₃ + 5 H₂SO₄ (8)

It is to be noted in reaction (8) that manganese hydroxide is partly formed as oxyhydroxide. The sulphuric acid that is formed is neutralised with lime for example to maintain a certain pH value:

5 H₂SO₄ + 5 Ca(OH)₂ ↔ 5 CaSO₄ 2 H₂O (9)

Thanks to effective mixing, lime can be fed to the surface of the liquid in the reactor, from where the lime is directed to the primary mixing zone of the mixer. When the lime is fed in this way, it reacts, forming loose particles of gypsum without causing a disruptive amount of gypsum formation on the reactor structures.

## Claims

1. A mixer (1) providing a powerful pumping capacity for mixing a solution or slurry and a gas, whereby the mixer comprises a circular plate (3) attached symmetrically to the lower end of a shaft (2), upright inner mixer blades (4) attached radially above and below to the outer edge of the plate and outer blades (6) attached to the circular plate by means of an arm (5), **characterised in that** the inner and outer blades (4,6) are attached symmetrically in height in relation to the plane formed by the circular plate (3).

2. A mixer according to claim 1, **characterised in that** both the inner and outer blades (4,6) are 5 - 8 in number.

3. A mixer according to claim 1, **characterised in that** the inner edge (7) of the inner blade, which includes both the parts that are above and below the circular plate (3), is made to be curved in the direction of the mixer shaft so that the upper edge (8) and the lower edge (9) of the blade are horizontal inwards from the outer edge (10) for a distance that is 35-50 % of the entire width of the blade.

4. A mixer according to claim 3, **characterised in that** the curved inner edge (7) of the inner blade is shaped like a parabola.

5. A mixer according to claim 1, **characterised in that** the height of the inner blades (7) is in the region of 38 - 46 % and the width 14 - 20 % of the total diameter of the mixer.

6. A mixer according to claim 1, **characterised in that** the outer edge (10) of the inner blade is vertical and extends preferably beyond the circular plate (3) by a distance that is in the region of 0 - 2 % of the diameter of the mixer.

7. A mixer according to claim 1, **characterised in that** the outer blades (6) are at a 50 - 70° angle, preferably 60°, to the plane formed by the circular plate (3).

8. A mixer according to claim 1, **characterised in that** the outer blades (6) are rectangular in shape and that their height is in the region of 3 - 3.5 times their width.

9. A mixer according to claim 1, **characterised in that** the inner blades (4) and outer blades (6) face each other, i.e. the arm (5) connecting the circular plate to the outer blade is attached to the circular plate at the same point as the inner blade.

10. A mixer according to claim 1, **characterised in that** the inner blades (4) and outer blades (6) are attached to the circular plate (3) so that they are offset to each other.

11. A mixer according to claim 10, **characterised in that** the inner blades (4) and outer blades (6) are offset to each other by between 0 - 36°.

12. A mixer according to claim 10, **characterised in that** the offset between the inner and outer blades is adjustable.

13. A mixer according to claim 1, **characterised in that** the length of the arms (5) attaching the outer blades (6) to the circular plate (3) is in the region of 3-4 % of the total diameter of the mixer.

14. A mixer according to claim 1, **characterised in that** the mixer is used in atmospheric conditions.

15. A mixer according to claim 1, **characterised in that** the mixer is used in an autoclave.

16. A method for feeding gas into a solution or slurry particularly in hydrometallurgical processes, **characterised in that** the effective dispersing of gas into a solution and good micro- and macro-level mixing is achieved by means of one mixer (1) according to any one of the claims 1 to 15 located in an agitated reactor (11), whereby the gas dispersing and micro-level mixing occur by means of the inner blades (4) of the mixer and macro-level mixing by means of the outer blades (6) of the mixer, and that as a result of their combined effect a flow is obtained that rises up the walls of the agitated reactor and turns down near the surface of the liquid to the mixer.

17. A method according to claim 16, **characterised in that** the gas is mixed into the solution in a reactor which has a filling height to diameter ratio of 0.8 - 1.4.

18. A method according to claim 16, **characterised in that** the mixing of the gas into the solution occurs with a mixer with a power factor Nₚ in the region of 4 - 10, whereby the tip speed of the outer blades is a maximum in the region of 5 - 7 m/s.

19. A method according to claim 18, **characterised in that** the solution to be treated is a chromium(VI)-containing solution and the gas to be fed in is sulphur dioxide.

20. A method according to claim 19, **characterised in that** the solution is a chromium(VI)-containing nitric acid-based solution.

21. A method according to claim 19, **characterised in that** the solution is a chromium(VI)-containing sulphuric acid-based solution.

22. A method according to claim 16, **characterised in that** the solution to be treated contains at least one of the following metals: zinc, nickel or cobalt, and that the gas to be fed in is a sulphur dioxide- and oxygen-containing gas.

## Patentansprüche

1. Mischer (1) zum Bereitstellen einer leistungsstarken Pumpleistung zum Mischen einer Lösung oder Aufschlämmung, und eines Gases, wobei der Mischer eine kreisförmige Platte (3), welche symmetrisch zu dem unteren Ende einer Welle (2) befestigt ist, aufrechte innere Mischerschaufeln (4), welche seitlich oberhalb und unterhalb an der Außenkante der Platte befestigt sind, und äußere Schaufeln (6), welche an der kreisförmigen Platte mittels eines Armes (5) befestigt sind, aufweist, **dadurch gekennzeichnet, dass** die inneren und äußeren Schaufeln (4, 6) symmetrisch in der Höhe, in Bezug auf die Ebene, welche durch kreisförmige Platte (3) gebildet wird, angebracht sind.

2. Mischer nach Anspruch 1, **dadurch gekennzeichnet, dass** sowohl die inneren und die äußeren Schaufeln (4, 6) 5 - 8 in der Anzahl sind.

3. Mischer nach Anspruch 1, **dadurch gekennzeichnet, dass** die Innenkante (7) der inneren Schaufel, die sowohl die Teile enthält, die oberhalb und unterhalb der kreisförmigen Platte (3) sind, hergestellt ist, um gekrümmt in die Richtung der Mischerwelle zu sein, sodass die Oberkante (8) und die Unterkante (9) der Schaufel nach innen von der Außenkante (10) für eine Distanz, die 35 - 50% der gesamten Breite des Blattes ist, horizontal sind.

4. Mischer nach Anspruch 3, **dadurch gekennzeichnet, dass** die gekrümmte Innenkante (7) der inneren Schaufel wie eine Parabel geformt ist.

5. Mischer nach Anspruch 1, **dadurch gekennzeichnet, dass** die Höhe der inneren Schaufeln (7) im Bereich von 38 - 46% und die Breite 14 - 20% des Gesamtdurchmessers des Mischers sind.

6. Mischer nach Anspruch 1, **dadurch gekennzeichnet, dass** die Außenkante (10) der inneren Schaufel vertikal ist, und sich vorzugsweise über die kreisförmige Platte (3) für eine Distanz, die im Bereich von 0 - 2% des Durchmessers des Mischers ist, erstreckt.

7. Mischer nach Anspruch 1, **dadurch gekennzeichnet, dass** die äußeren Schaufeln (6) in einem von Winkel von 50 - 70 °, vorzugsweise 60 °, zu der Ebene sind, welche durch die kreisförmige Platte (3) gebildet wird.

8. Mischer nach Anspruch 1, **dadurch gekennzeichnet, dass** die äußeren Schaufeln (6) eine rechteckige Form aufweisen, und dass ihre Höhe im Bereich von dem 3 - 3,5-fachen ihrer Breite ist.

9. Mischer nach Anspruch 1, **dadurch gekennzeichnet, dass** die inneren Schaufeln (4) und die äußeren Schaufeln (6) einander zugewandt sind, das heißt, dass der Arm (5), der die kreisförmigen Platte mit der äußeren Schaufel verbindet, an der kreisförmigen Platte an dem gleichen Punkt wie die innere Schaufel befestigt ist.

10. Mischer nach Anspruch 1, **dadurch gekennzeichnet, dass** die inneren Schaufeln (4) und die äußeren Schaufeln (6) an der kreisförmigen Platte (3) befestigt sind, so dass sie zueinander versetzt sind.

11. Mischer nach Anspruch 10, **dadurch gekennzeichnet, dass** die inneren Schaufeln (4) und die äußeren Schaufeln (6) zwischen 0 - 36 ° zueinander versetzt sind.

12. Mischer nach Anspruch 10, **dadurch gekennzeichnet, dass** der Versatz zwischen den inneren und äußeren Schaufeln einstellbar ist.

13. Mischer nach Anspruch 1, **dadurch gekennzeichnet, dass** die Länge der Arme (5), die die äußeren Schaufeln (6) mit der kreisförmigen Befestigungsplatte (3) befestigen, im Bereich von 3 - 4% des Gesamtdurchmessers des Mischers liegt.

14. Mischer nach Anspruch 1, **dadurch gekennzeichnet, dass** der Mischer in atmosphärischen Bedingungen verwendet wird.

15. Mischer nach Anspruch 1, **dadurch gekennzeichnet, dass** der Mischer in einem Autoklaven verwendet wird.

16. Verfahren zum Zuführen von Gas in eine Lösung oder eine Aufschlämmung, insbesondere in hydrometallurgischen Prozessen, **dadurch gekennzeichnet, dass** die effektive Dispergierung von Gas in eine Lösung und gutes Mischen auf Mikro- und Makroebene mittels eines Mischers (1) nach einem der Ansprüche 1 bis 15 erreicht wird, welcher in einem rührenden Reaktor (11) angeordnet ist, wobei die Gas-Dispergierung und das Mikroebenen-Mischen mittels der inneren Schaufeln (4) des Mischers, und das Makroebenen-Mischen mittels den äußeren Schaufeln (6) des Mischers auftreten, und dass als Resultat ihrer kombinierten Wirkung eine Strömung erhalten wird, welche die Wände des rührenden Reaktors hochsteigt und in der Nähe der Oberfläche der Flüssigkeit zu dem Mischer abwärtssteigt.

17. Verfahren nach Anspruch 16, **dadurch gekennzeichnet, dass** das Gas in die Lösung in einem Reaktor gemischt wird, der ein Verhältnis der Füllhöhe bezüglich dem Durchmesser von 0,8 - 1,4 aufweist.

18. Verfahren nach Anspruch 16, **dadurch gekennzeichnet, dass** das Mischen des Gases in die Lösung mit einem Mischer mit einem Leistungsfaktor N_{P} im Bereich von 4 - 10 auftritt, wobei die Spitzengeschwindigkeit der äußeren Schaufeln ein Maximum in dem Bereich von 5 - 7 m/s aufweist.

19. Verfahren nach Anspruch 18, **dadurch gekennzeichnet, dass** die zu behandelnde Lösung eine Chrom-(VI)-haltige Lösung ist, und das Gas, welches zugeführt werden soll, Schwefel-Dioxid ist.

20. Verfahren nach Anspruch 19, **dadurch gekennzeichnet, dass** die Lösung eine Chrom-(VI)-haltige salpetersäure-basierende Lösung ist.

21. Verfahren nach Anspruch 19, **dadurch gekennzeichnet, dass** die Lösung eine Chrom-(VI)-haltige schwefelsäure-basierende Lösung ist.

22. Verfahren nach Anspruch 16, **dadurch gekennzeichnet, dass** die Lösung, welche behandelt wird, mindestens eines der folgenden Metalle enthält: Zink, Nickel oder Kobalt, und dass das Gas, welches zugeführt werden soll, ein schwefeldioxid- und sauerstoffhaltiges Gas ist.

## Revendications

1. Mélangeur (1) à haute capacité de pompage permettant de mélanger une solution ou suspension et un gaz, ce par quoi le mélangeur comprend une plaque circulaire (3) fixée symétriquement à l'extrémité inférieure d'un arbre (2), des lames intérieures verticales (4) de mélangeur fixées radialement au-dessus et au-dessous du bord extérieur de la plaque et des lames extérieures (6) fixées à la plaque circulaire au moyen d'un bras (5), **caractérisé en ce que** les lames intérieures et extérieures (4, 6) sont fixées symétriquement en hauteur par rapport au plan formé par la plaque circulaire (3).

2. Mélangeur selon la revendication 1, **caractérisé en ce que** à la fois les lames intérieures et extérieures (4, 6) sont au nombre de 5 à 8.

3. Mélangeur selon la revendication 1, **caractérisé en ce que** le bord intérieur (7) de la lame intérieure, qui comprend à la fois les parties qui sont situées au-dessus et au-dessous de la plaque circulaire (3), est conçu pour former une courbe dans la direction de l'arbre de mélangeur de sorte que le bord supérieur (8) et le bord inférieur (9) de la lame sont orientés horizontalement vers l'intérieur, à partir du bord extérieur (10) sur une distance qui fait 35 à 50 % de la largeur totale de la lame.

4. Mélangeur selon la revendication 3, **caractérisé en ce que** le bord intérieur incurvé (7) de la lame intérieure a la forme d'une parabole.

5. Mélangeur selon la revendication 1, **caractérisé en ce que** la hauteur des lames intérieures (7) est comprise dans la plage de 38 à 46 % du diamètre total du mélangeur et **en ce que** la largeur est comprise dans la plage de 14 à 20 % de ce dernier.

6. Mélangeur selon la revendication 1, **caractérisé en ce que** le bord extérieur (10) de la lame intérieure est vertical et s'étend de préférence au-delà de la plaque circulaire (3) sur une distance qui est comprise dans la plage de 0 à 2 % du diamètre du mélangeur.

7. Mélangeur selon la revendication 1, **caractérisé en ce que** les lames extérieures (6) forment un angle de 50 à 70°, de préférence de 60°, par rapport au plan formé par la plaque circulaire (3).

8. Mélangeur selon la revendication 1, **caractérisé en ce que** les lames extérieures (6) ont une forme rectangulaire et **en ce que** leur hauteur est comprise dans la plage de 3 à 3,5 fois leur largeur.

9. Mélangeur selon la revendication 1, **caractérisé en ce que** les lames intérieures (4) et les lames extérieures (6) se font face les unes les autres, c'est-à-dire que le bras (5) reliant la plaque circulaire à la lame extérieure est fixé à la plaque circulaire au niveau du même point que la lame intérieure.

10. Mélangeur selon la revendication 1, **caractérisé en ce que** les lames intérieures (4) et les lames extérieures (6) sont fixées à la plaque circulaire (3) de façon à se trouver décalées les unes des autres.

11. Mélangeur selon la revendication 10, **caractérisé en ce que** les lames intérieures (4) et les lames extérieures (6) sont décalées les unes des autres d'une valeur comprise entre 0 et 36°.

12. Mélangeur selon la revendication 10, **caractérisé en ce que** le décalage entre les lames intérieures et extérieures peut être réglé.

13. Mélangeur selon la revendication 1, **caractérisé en ce que** la longueur des bras (5) fixant les lames extérieures (6) à la plaque circulaire (3) est comprise dans la plage de 3 à 4 % du diamètre total du mélangeur.

14. Mélangeur selon la revendication 1, **caractérisé en ce que** le mélangeur est utilisé dans des conditions atmosphériques.

15. Mélangeur selon la revendication 1, **caractérisé en ce que** le mélangeur est utilisé dans un autoclave.

16. Procédé pour injecter du gaz dans une solution ou suspension épaisse particulièrement lors de transformations hydrométallurgiques, **caractérisé en ce que** la dispersion efficace de gaz dans une solution et un bon mélange de niveau micrométrique et de niveau macrométrique sont obtenus au moyen d'un mélangeur (1) selon l'une quelconque des revendications 1 à 15 situé dans un réacteur à agitation (11), ce par quoi la dispersion de gaz et le mélange de niveau micrométrique se font au moyen des lames intérieures (4) du mélangeur et le mélange de niveau macrométrique est obtenu au moyen des lames extérieures (6) du mélangeur, et **en ce que**, grâce à leur effet combiné, un écoulement est obtenu, lequel monte le long des parois du réacteur à agitation et redescend au voisinage de la surface du liquide vers le mélangeur.

17. Procédé selon la revendication 16, **caractérisé en ce que** le gaz est mélangé dans la solution dans un réacteur qui a un rapport de remplissage de la hauteur au diamètre compris dans la plage de 0,8 à 1,4.

18. Procédé selon la revendication 16, **caractérisé en ce que** le mélange du gaz dans la solution est obtenu au moyen d'un mélangeur ayant un facteur de puissance Nₚ compris dans la plage de 4 à 10, ce par quoi la vitesse d'extrémité des lames extérieures est au maximum comprise dans la plage de 5 à 7 m/s.

19. Procédé selon la revendication 18, **caractérisé en ce que** la solution à traiter est une solution contenant du chrome (VI) et **en ce que** le gaz à injecter est du dioxyde de soufre.

20. Procédé selon la revendication 19, **caractérisé en ce que** la solution est une solution à base d'acide nitrique contenant du chrome (VI).

21. Procédé selon la revendication 19, **caractérisé en ce que** la solution est une solution à base d'acide sulfurique contenant du chrome (VI).

22. Procédé selon la revendication 16, **caractérisé en ce que** la solution à traiter contient au moins l'un des métaux suivants : du zinc, du nickel ou du cobalt, et **en ce que** le gaz à injecter est un gaz contenant du dioxyde de soufre et de l'oxygène.
